(19) Europäisches Patentamt
European Patent Office
Office européen des brevets

(11) **EP 2 650 402 A1**

(12) **EUROPEAN PATENT APPLICATION**
published in accordance with Art. 153(4) EPC

(43) Date of publication:
16.10.2013 Bulletin 2013/42

(51) Int Cl.:
*C25B 9/00* (2006.01)　　*C01B 3/02* (2006.01)
*C25B 1/04* (2006.01)　　*C25B 3/04* (2006.01)
*C25B 15/02* (2006.01)

(21) Application number: 10860536.1

(22) Date of filing: 08.12.2010

(86) International application number:
PCT/JP2010/072033

(87) International publication number:
WO 2012/077200 (14.06.2012 Gazette 2012/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: TOYOTA JIDOSHA KABUSHIKI
KAISHA
Toyota-shi, Aichi-ken, 471-8571 (JP)

(72) Inventor: ITO, Yasushi
Toyota-shi
Aichi 471-8571 (JP)

(74) Representative: Intès, Didier Gérard André et al
Cabinet Beau de Loménie
158, rue de l'Université
75340 Paris Cedex 07 (FR)

(54) **MIXED GAS GENERATION DEVICE**

(57)　The present invention relates to a mixed gas generating device and has an object to provide a mixed gas generating device capable of generating CO and $H_2$ with favorable energy efficiency.

An energy efficiency characteristic line 10 of electrolysis with respect to a generation ratio between CO and $H_2$ (CO / $H_2$) becomes a curve projecting downward. Thus, electrolysis is executed not at an operation point A where CO / $H_2$ = 1/2 is given but in a divided manner at an operation point B and an operation point C. However, the electrolysis time is divided into electrolysis time periods such that the generation ratio of a mixed gas becomes CO / $H_2$ = 1/2 after the electrolysis is executed with the respective generation ratios. As a result, energy efficiency in the vicinity of an operation point D higher than the operation point A can be obtained.

*Fig.1*

**Description**

Technical Field

The present invention relates to a mixed gas generating device. More particularly, the present invention relates to a mixed gas generating device for generating a mixed gas composed of $H_2$ and CO by electrolyzing water and $CO_2$.

Background Art

Fossil fuels including petroleum, coal, natural gas and the like are used as material for generation of heat and electricity and as fuels for transportation and support the modem energy consumption society. However, such fossil fuels are exhaustible fuels and their reserves are limited. Thus, it is needless to say that preparation is needed for depletion of the fossil fuels. Moreover, emissions of $CO_2$ caused by combustion of the fossil fuels into the atmosphere are known to be one of the factors which cause global warming. Thus, reduction of $CO_2$ emissions has become a recent object.

As a means for solving these problems, an alternative fuel using $CO_2$ as a material has been examined. For example, Patent Document 1 discloses a system for manufacturing hydrocarbon fuel (HC) using $CO_2$ as a material. This system includes an electrolytic cell having an oxygen ion conductive film composed of a solid oxide electrolyte and a cathode and an anode arranged on the both surfaces thereof, respectively, and HC is synthesized by a material gas generated by using this electrolytic cell.

A specific manufacturing method of HC in the above system is as follows. First, while electric power and heat are supplied to the electrolytic cell, a $CO_2$ gas and steam are supplied to the cathode, and a carbon monoxide (CO) gas and a hydrogen ($H_2$) gas which become material gases are generated on this cathode, respectively. Subsequently, the generated material gas is recovered from the electrolytic cell and made to react in a known manufacturing device using Fischer-Tropsch reaction (FT reaction) so as to obtain HC.

Related Art Literature

Patent Documents

Patent Document 1: JP- A- 2009- 506213
Patent Document 2: JP- A- 9- 085004
Patent Document 3: JP- A- 2008- 214563

Summary of the Invention

Problem to be Solved by the Invention

According to the system of the above-described Patent Document 1, CO and $H_2$ which become materials of HC can be generated simultaneously. However, if time for executing electrolysis is set to a given period, energy (electric power) input for electrolysis takes a different value depending on a potential difference applied between the anode and the cathode. Moreover, this potential difference is correlated with a generation ratio of CO and $H_2$. Thus, calorific values of CO and $H_2$ are varied depending on the potential difference. From these facts, it was likely that energy efficiency (a calorific value of a generated product to input energy. The same applies to the following) lowers depending on the potential difference during electrolysis.

The present invention was made in order to solve the above-described problem and has an object to provide a mixed gas generating device which can generate CO and $H_2$ with favorable energy efficiency.

Means for Solving the Problem

To achieve the above mentioned purpose, a first aspect of the present invention is a mixed gas generating device for generating a mixed gas composed of hydrogen and carbon monoxide with a predetermined mixing ratio by electrolyzing water and carbon dioxide, comprising:

at least one electrolytic tank provided with water and carbon dioxide therein;
a pair of electrodes provided in said electrolytic tank; and

potential control means for applying a plurality of potential differences including a potential difference larger than a predetermined potential difference which achieves said predetermined mixing ratio and a potential difference smaller than said predetermined potential difference between said electrodes.

A second aspect of the present invention is the mixed gas generating device according to the first aspect, wherein said plurality of potential differences are determined on the basis of a model which creates an association between energy efficiency specified by a calorific value of a generated product with respect to input energy and said plurality of potential differences.

A third aspect of the present invention is the mixed gas generating device according to the second aspect, wherein

the order of applying said plurality of potential differences between said electrodes is determined in accordance with a degree of temporal change of said energy efficiency obtained in the case where each of said potential differences is applied between said electrodes.

A forth aspect of the present invention is the mixed gas generating device according to any one of the third aspects, wherein

said electrolytic tank is provided with an electrolytic solution having carbon dioxide absorbing characteristics therein; and the order of applying said plurality of potential differences between said electrodes is determined to be an order from the larger potential difference.

A fifth aspect of the present invention is the mixed gas generating device according to the forth aspect, further comprising:

pH changing means for changing pH of said electrolytic solution from the alkali side to the acid side, when said plurality of potential differences are to be applied between said electrodes.

A sixth aspect of the present invention is the mixed gas generating device according to any one of the first to the fifth aspects, wherein

each potential difference on the side smaller than said predetermined potential difference is set to a potential difference larger than a predetermined potential difference at which a generation speed of hydrogen to be generated becomes the lowest speed determined in advance.

Advantages of the Invention

According to the first invention, when a mixed gas is to be generated with a predetermined mixing ratio, a plurality of potential differences including a potential difference larger than a predetermined potential difference which achieves this predetermined mixing ratio and a potential difference smaller than this predetermined potential difference can be applied between electrodes. Since the mixing ratio of CO and $H_2$ is correlated with a potential difference to be applied between the electrodes, it is only necessary to apply the predetermined potential difference between the electrodes in order to achieve the predetermined mixing ratio. However, considering energy efficiency, the energy efficiency obtained by applying the predetermined potential difference is not necessarily the best. In this regard, the predetermined mixing ratio can be achieved even if the potential difference is divided into the plurality of potential differences and applied. Moreover, by applying the potential difference divided into the plurality of potential differences, a combination that can improve the energy efficiency better than the application of the predetermined potential difference can be realized. Therefore, according to the first invention, CO and $H_2$ can be generated with a predetermined mixing ratio with favorable energy efficiency.

According to the second invention, a combination of the potential differences that can improve the energy efficiency better than the application of the predetermined potential difference can be determined easily by a model which relates the energy efficiency determined by a calorific value of a generated product to input energy with the plurality of potential differences.

If the potential difference is applied between the electrodes, electrolysis progresses and water and $CO_2$ in the electrolytic tank decrease, and thus, energy efficiency lowers. According to the third invention, the order of applying these potential differences is determined in accordance with a degree of temporal change of the energy efficiency obtained in the case where each of the potential differences is applied. Thus, it becomes possible to apply these potential differences in the order from that with a higher degree of decrease in the energy efficiency, for example. Therefore, an influence of the temporal change of the energy efficiency can be minimized.

If the plurality of potential differences are applied between the electrodes, electrolysis progresses, and a temperature in the electrolytic tank rises. If the temperature in the electrolytic tank rises, $CO_2$ absorbed in an electrolytic solution evaporates and its absorbed amount decreases. If $CO_2$ decreases, it becomes difficult to achieve the predetermined mixing ratio. According to the fourth invention, the order of applying the plurality of potential differences between the electrodes is determined from that with a larger potential difference. As described above, the mixing ratio of CO and $H_2$ is correlated with the potential difference to be applied between the electrodes. In more detail, if the potential difference to be applied between the electrodes becomes large, a CO generation amount increases. Thus, by applying the potential differences in the order from that with a larger potential difference according to the fourth invention, $CO_2$ can be electrolyzed before $CO_2$ decreases. Therefore, reduction in the CO generation amount caused by the temperature rise in the electrolytic tank can be favorably suppressed.

According to the fifth invention, pH in the electrolytic tank can be changed by pH changing means from the alkali side to the acid side. Therefore, when the potential differences are applied in the order from that with a larger potential difference, pH can be changed from the alkali side where $CO_2$ rarely evaporates to the acid side where $H_2$ can be easily generated. Therefore, the reduction in the CO generation amount in pH on the alkali side can be favorably suppressed, while $H_2$ generation speed in pH on the acid side can be improved.

According to the sixth invention, each of the potential differences on the side smaller than the predetermined potential difference can be set to a potential difference larger than the predetermined potential difference at which the generation speed of $H_2$ to be generated becomes the lowest speed determined in advance. Therefore, since the $H_2$ generation speed can be ensured, reduction in the work efficiency during electrolysis can be decreased.

Brief Description of Drawings

Fig. 1 is a diagram illustrating a relationship between the generation ratio between CO and $H_2$ and the energy efficiency during electrolysis.

Fig. 2 is a diagram illustrating the lateral axis in Fig. 1 is replaced by the generation ratio of CO to the total generation amount.

Fig 3 is a diagram illustrating a temporal change of the energy efficiency during electrolysis.

Fig.4 is a diagram for explaining the order of electrolysis in this embodiment.

Fig.5 is a diagram for explaining an outline of the control in this embodiment.

Fig.6 is a diagram illustrating the generation speeds (mol/min) of CO and $H_2$ and the energy efficiency with respect to the generation ratio between CO and $H_2$.

Mode for Carrying Out the Invention

Embodiment 1

[Configuration of electrolysis apparatus]

First, configuration of an electrolysis apparatus of an embodiment 1 of the present invention will be described in brief. The electrolysis apparatus of this embodiment includes an electrolytic tank filled with an electrolytic solution in which $CO_2$ is dissolved, a working electrode (WE), a counter electrode (CE), and a reference electrode (RE) provided in this electrolytic tank, and a potentiostat configured capable of changing a voltage of the WE to the RE. Detailed explanation of these constituents will be omitted since these constituents are in common with a known electrolysis apparatus.

The electrolysis apparatus of this embodiment also includes a controller which holds a voltage of the WE to the RE at a set value by having a predetermined current value flow between the WE and the CE by controlling the potentiostat. An internal memory of this controller stores a set value of the voltage corresponding to an operation point determined by a method which will be described later, operation time and the like. The controller controls the potentiostat on the basis of them.

Subsequently, an electrolytic reaction in the above- described electrolysis apparatus will be described. By applying an electric current flow between the WE and the CE by controlling the potentiostat, electrochemical reactions of the following formulas (1) to (3) occur at the WE and the CE:

$$WE: CO_2 + 2H^+ + 2e^- \rightarrow CO + H_2O \qquad (1)$$

$$2H^+ + 2e^- \rightarrow H_2 \qquad (2)$$

$$CE: 2H_2O \rightarrow O_2 + 4H^+ + 4e^- \qquad (3)$$

As illustrated in the above-described formulas (1) and (2), CO and $H_2$ are generated simultaneously in the WE.

Thus, by collecting the generated CO and $H_2$ and applying the FT reaction to them, HC as an alternative fuel for the fossil fuel can be manufactured. It is needless to say, here, that HC is preferably manufactured efficiently from a material stage. In this connection, it has been known that high energy efficiency of the FT reaction is achieved when the mixing ratio between CO and $H_2$ is set to CO / $H_2$ = 1/2.

In this embodiment, considering the energy efficiency of the FT reaction, the generation ratio between CO and $H_2$ to be generated at the WE simultaneously is set to CO / $H_2$ = 1/2. In general, in order to set the mixing ratio between CO and $H_2$ to CO / $H_2$ = 1/2, the ratio needs to be adjusted from CO and $H_2$ prepared independently. In that regard, according to the above-described electrolysis apparatus, CO and $H_2$ can be generated simultaneously on the WE. Thus, by setting the generation ratio to CO / $H_2$ = 1/2 in advance, the material generation and the ratio adjustment can be proceeded with at the same time. If the material generation and the ratio adjustment can be proceeded with at the same time, the generated CO and $H_2$ can be put into the FT reaction as they are. Therefore, HC can be manufactured with high energy efficiency from the material stage.

[Characteristics of Embodiment 1]

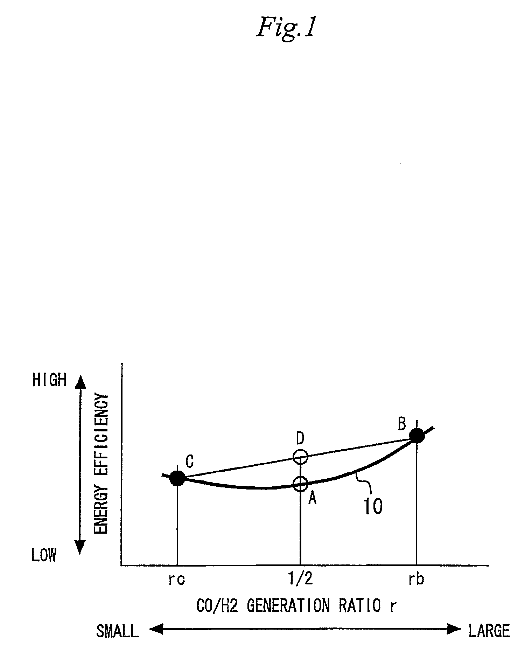

Incidentally, the generation ratio between CO and $H_2$ largely depends on a current value made to flow between the WE and CE, that is, a set value of a voltage of the WE to the RE. Thus, in order to set the generation ratio to CO / $H_2$ =1/2, it is only necessary to set this voltage to an appropriate value. However, if CO and $H_2$ are to be generated at the same time, the energy efficiency with the other generation ratios might become higher than the energy efficiency at a point when CO / $H_2$ = 1/2 is given. This will be described by using Fig. 1. Fig. 1 is a diagram illustrating a relationship between the generation ratio between CO and $H_2$ (= voltage of the WE to the RE) and the energy efficiency during electrolysis.

A curve in Fig. 1 is an energy efficiency characteristic line 10 of electrolysis to CO / $H_2$. Points A to C on the characteristic line 10 indicate operation points, respectively. Specifically, the operation point A corresponds to a case where the generation ratio between CO and $H_2$ is set to 1/2 (the voltage of the WE to the RE is set to a set value $V_A$) and electrolysis is executed. The operation point B and the operation point C correspond to a case where the generation ratio between CO and $H_2$ is set to rb (> 1/2) and rc (< 1/2), respectively (the voltage of the WE to the RE is set to set values $V_B$(> $V_A$) and $V_C$(< $V_A$)) and electrolysis is executed.

As illustrated in Fig. 1, the characteristic line 10 is a curve projecting downward. One of the reasons is that a generation potential of $H_2$ in an absolute value is 0.11 V and is lower than the generation potential of CO. If the generation potential of $H_2$ is lower than the generation potential of CO, when the voltage of the WE to the RE is set low, a $H_2$ generation amount becomes relatively large, and CO / $H_2$ becomes smaller. Here, the voltage of the WE to the RE is low is synonymous with the fact that the input energy during electrolysis is small. Therefore, the smaller CO / $H_2$ is, the higher the energy efficiency becomes. That is, by sliding the operation point in the direction of the operation point C from the operation point A, the energy efficiency becomes higher.

Another reason is that the calorific value of CO (283 kJ/mol) is larger than the calorific value of $H_2$ (242 kJ/mol). As described above, the $H_2$ generation potential is lower than the CO generation potential. Thus, by setting the voltage of the WE to the RE higher, the CO generation amount can be increased, and CO / $H_2$ becomes large. Here, since the calorific value of CO is larger than the calorific value of $H_2$, if CO / $H_2$ becomes larger, the calorific value of the generated product increases. Therefore, the larger CO / $H_2$ becomes, the higher the energy efficincy becomes. That is, by sliding the operation point in the direction of the operation point B from the operation point A, the energy efficiency is improved.

In this embodiment, in view of such characteristics of the characteristic line 10, electrolysis is executed not at the operation point A but at the operation point B and the operation point C in a divided manner. That is, instead of electrolysis for a given  period of time at the set value $V_A$, the execution of electrolysis is shared by the set value $V_B$ and the set value $V_C$ without changing the total time. However, the electrolysis time is divided into electrolysis time periods in such a manner that the generation ratio of a mixed gas becomes CO / $H_2$ = 1/2 after the electrolysis is executed with the respective generation ratios. As a result, energy efficiency in the vicinity of an operation point D higher than the operation point A can be obtained.

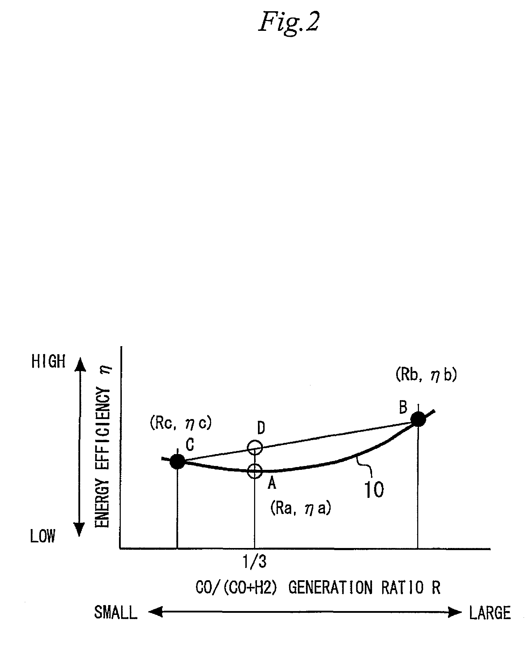

A specific method of determining the operation points B and C will be described. For convenience of calculation, the lateral axis in Fig. 1 is replaced by the generation ratio of CO to the total generation amount as illustrated in Fig. 2 (= CO / (CO + $H_2$)). Then, CO / $H_2$ = 1/2 can be converted to CO / (CO + $H_2$) = 1/3. As illustrated in Fig. 2, each of coordinates of the operation points A, B, and C is set at (Ra, ηa), (Rb, ηb), and (Rc, ηc). Moreover, assume that the total generation amount of CO and $H_2$ at the operation point A is Ma (mol), input energy is Ea, and the calorific value of the generated product is Ha. For the operation points B and C, too, assume that the total generation amounts of CO and $H_2$ are Mb and Mc, input energies are Eb and Ec, and the calorific values of the generated product are Hb and Hc. Moreover calorific values per unit mol of CO and $H_2$ are assumed to be $H_{CO}$ and $H_{H2}$.

The energy efficiency ηa at the operation point A can be expressed by the following formula (4):

$$\eta a = Ha / Ea = \{RaMaH_{CO} + (1-Ra)MaH_{H2}\}/Ea \ ... \ (4)$$

The energy efficiency $\eta b$ at the operation point B and the energy efficiency $\eta c$ at the operation point C can be also expressed similarly to the above formula (4).

The generated product amount has relationship of the following formulas (5) and (6):

$$Ma = Mb + Mc \ ... \ (5)$$

$$RaMa = RbMb + RcMc \ ... \ (6)$$

By organizing the above formula (6) using the above formula (5), the following formula (7) can be derived:

$$Mb / Mc = (Ra-Rc) / (Rb-Ra) \ ... \ (7)$$

The total energy efficiency $\eta b + c$ when execution of electrolysis is divided by the operation point B and the operation point C is expressed by the following formula (8) using the above formulas (4) and (5) and Hb + Hc = Ha:

$$\eta b + c = (Hb + Hc) / (Eb + Ec)$$
$$= (Mb + Mc) \{RaH_{CO} + (1-Ra)H_{H2}\} / [Mb / \eta b \{RbH_{CO} + (1-Rb)H_{H2}\} + Mc / \eta c$$
$$\{RcH_{CO} + (1-Rc)H_{H2}\}] \ ... \ (8)$$

By dividing the upper and lower sides in the formula (8) by Mc, the following formula (9) can be derived:

$$\eta b + c = (Mb/Mc +1) \{RaH_{CO} + (1-Ra)H_{H2} \} / [(1 / \eta b) (Mb / Mc) \{RbH_{CO} + (1-Rb)H_{H2}\} + (1 / \eta c) \{RcH_{CO} + (1-Rc)H_{H2}\}] \ ... \ (9)$$

By multiplying the upper and lower sides of the above formula (9) by (Rb-Ra) using the above formula (7), the following formula (10) can be derived:

$$\eta b + c = (Rb-Rc) \{RaH_{CO} + (1-Ra)H_{H2}\} / [\{(Ra-Rc) / \eta b\}\{RbH_{CO} + (1-Rb)H_{H2}\} + \{(Rb-Ra) / \eta c\}\{RcH_{CO} + (1-Rc)H_{H2}\}] \ ... \ (10)$$

By organizing the above formula (10) using Ra = 1/3, the following formula (11) can be derived:

$$\eta b + c = (Rb-Rc) (Hc + 2H_{H2}) / [\{(1-3Rc) / \eta b\}\{RbH_{CO} + (1-Rb)H_{H2}\}] + \{(3Rb-1) / \eta c\} \{RcH_{CO} + (1-Rc)H_{H2}\}] \ ... \ (11)$$

Here, $H_{CO}$ is 283 kJ/mol ($CO + 1/2O_2 \rightarrow CO_2 + 283$ kJ/mol) and $H_{H2}$ = 242 kJ/mol ($H_2 + 1/2O_2 \rightarrow H_2O + 242$ kJ/mol).

Therefore, by obtaining a plurality of (Rb, $\eta b$) and (Rc, $\eta c$) in advance under actual electrolysis conditions (type of electrolytic solution, set values $V_B$ and $V_C$ of the voltage of the WE to the RE and the like) and by applying the (Rb, $\eta b$) and (Rc, $\eta c$) to the above formula (11), the total energy efficiency $\eta b + c$ can be calculated. It is only necessary that two points corresponding to the best among the total energy efficiency $\eta b + c$ calculated as above are determined as the operation points B and C.

As described above, according to this embodiment, since execution of electrolysis is divided by the operation point B and the operation point C determined by the above-described method, the energy efficiency in the vicinity of the operation point D higher than the operation point A can be obtained. Therefore, the energy efficiency during electrolysis can be improved. Thus, the energy efficiency during a series of HC manufacture from electrolysis to the FT reaction can be improved.

In this embodiment, electrolysis is executed at the operation points B and C, but electrolysis may be executed at three or more operation points. In this case the electrolysis can be improved if each of the electrolysis time is divided in such a manner that the generation ratio of a mixed gas becomes $CO / H_2 = 1/2$ after the electrolysis is executed at each operating point. This variation can be also applied similarly to embodiments 3 to 6 which will be described later.

Embodiment 2

[Configuration of electrolysis apparatus]

Subsequently, an electrolysis apparatus of Embodiment 2 of the present invention will be described. The electrolysis apparatus of this embodiment includes two electrolytic tanks, which is a point of difference from the configuration of the electrolysis apparatus in the above- described Embodiment 1. Since each constituent element is basically in common with those in the above- described Embodiment 1 except this point, the description will be omitted.

In the above-described Embodiment 1, one electrolytic tank is used and electrolysis is executed at the operation points B and C. However, it is required to control to switch the operation point from B to C (or from C to B) since the operation points B and C cannot be set at the same time. In this regard, according to this embodiment in which two electrolytic tanks are included, electrolysis at the operation point B and electrolysis at the operation point C can be executed in the respective electrolytic tanks. Therefore, advantageous effects substantially similar to the above-described Embodiment 1 can be obtained easily without the switching control of the operation point.

In this embodiment, two electrolytic tanks are included, but the number of electrolytic tanks may be three or more. If electrolysis is to be executed at three or more operation points, as described in the variation of the above-described Embodiment 1, electrolysis can be executed in various forms by combining the number of the operation points and the number of electrolytic tanks. For example, in the case of electrolysis at three operation points, it may be so configured that three electrolytic tanks are included, and electrolysis is executed at each corresponding operation point and tank. Moreover, in the case of electrolysis at three operation points, for example, it may be so configured that two electrolytic tanks are provided, in which only electrolysis at the operation point C is executed in one of them, while control of switching the operation point from C to B is executed in the other. As described above, in the case of the electrolysis by combining the number of operation points and the number of electrolytic tanks, too, advantageous effects similar to this embodiment can be obtained.

Embodiment 3

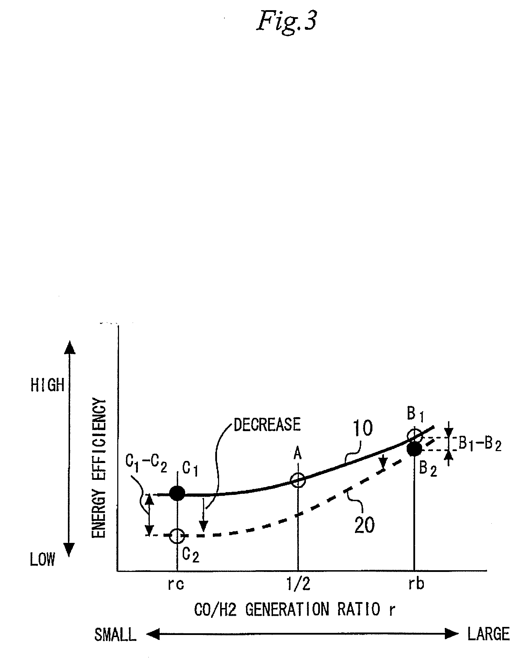

Subsequently, by referring to Fig. 3, Embodiment 3 of the present invention will be described. This embodiment uses the configuration of the above- described Embodiment 1 and is characterized in that the order of electrolysis is determined on the basis of a degree of deterioration of energy efficiency as the progress of the electrolysis. Since each constituent element is basically in common with those in the above- described Embodiment 1, the description will be omitted.

As described in the above-described Embodiment 1, by having an electric current flow between the WE and the CE by controlling the potentiostat, the reactions in the above formulas (1) to (3) progress. If the reactions in the above formulas (1) to (3) progress, a reaction substance in the electrolytic solution decreases. For example, if the reaction in the above formula (1) progresses, $CO_2$ in the electrolytic tank decreases, while if the reaction in the above formula (2) progresses, protons decrease. Therefore, concentration of the reaction substances in the electrolytic tank lowers over time. If the concentration of the reaction substance lowers, more input energy is required in order to generate certain amounts of CO and $H_2$. Therefore, the energy efficiency during electrolysis decreases over time.

Fig. 3 is a diagram illustrating a temporal change of the energy efficiency during electrolysis. If electrolysis progresses, the concentration of $CO_2$ or protons in the electrolytic solution lowers. And thus, the energy efficiency decreases over time. For example, the operation point of the electrolysis is sifted to an operation point $C_2$ from an operation point $C_1$, which was the start operation point of the electrolysis. Similarly, the operation point of the electrolysis is sifted to an operation point $B_2$ from an operation point $B_1$, which was the start operation point of the electrolysis. The other operation points are shifted to in the similar way, the characteristic line 10 may change to a characteristic line 20 with elapse of time.

Here, when attention is paid to a lowering width of the energy efficiency in Fig. 3, a relationship between a lowering width $(B_1 - B_2)$ of the energy efficiency from the operation point $B_1$ to the operation point $B_2$ and that from the operation point $C_1$ to the operation point $C_2$ $(C_1 - C_2)$ is $(B_1 - B_2) < (C_1 - C_2)$. Thus, in this embodiment, electrolysis is executed as: a voltage of the WE to the RE is set to the value $V_C$ at first and then is changed to the set value $V_B$ after the expiration of predetermined time. That is, the electrolysis is started at the operation point where the lowering width of the energy efficiency is larger. As a result, the energy efficiency at the operation point $C_1$ and the energy efficiency at the operation point $B_2$ can be obtained. Therefore, an influence of a temporal change of the energy efficiency can be minimized.

Incidentally, in electrolysis of this embodiment, the voltage of the WE to the RE is set to the set value $V_C$, and then is changed to the set value $V_B$ after the expiration of predetermined time. However, this order may be switched. Depending on the electrolysis conditions, this lowering width might become opposite. In that case, electrolysis is executed as: a voltage of the WE to the RE is set to the value $V_B$ at first and then is changed to the set value $V_B$ after the expiration of predetermined time. As a result, advantageous effects substantially similar to this embodiment can be obtained.

Moreover, depending on the electrolysis conditions, the energy efficiency might be improved over time. In that case, too, the order of electrolysis can be determined by the method similar to the above. That is, a temporal change width of the energy efficiency is compared, and if it is a lowering width, electrolysis is executed in the order from that with the larger value, while if it is an increasing width, electrolysis is executed in the order from that with the smaller value so that the effect substantially similar to this embodiment can be obtained.

Embodiment 4

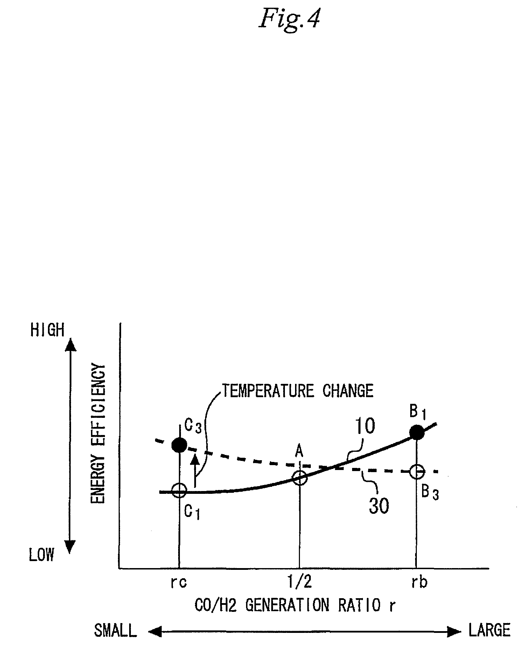

Subsequently, by referring to Fig. 4, Embodiment 4 of the present invention will be described. This embodiment uses the configuration of the above- described Embodiment 1 and is characterized in that the order of electrolysis is determined by considering a temperature rise of an electrolytic solution by progress of the electrolysis. Since each constituent element is basically in common with those in the above- described Embodiment 1, the description will be omitted.

As described above, by setting the mixing ratio between CO and $H_2$ after electrolysis to CO / $H_2$ = 1/2, energy efficiency in the FT reaction is favorable. However, since the temperature of the electrolytic solution rises by progress of the electrolysis, $CO_2$ dissolved in the electrolytic solution evaporates and $CO_2$ concentration lowers. If the $CO_2$ concentration lowers, the CO generation amount by the reaction in the above-described (1) also lowers. And thus, the generation ratio between CO and $H_2$ becomes smaller than 1/2.

Thus, in this embodiment, electrolysis mainly for generating CO is executed at first and then, electrolysis mainly for generating $H_2$ is executed. Fig. 4 is a diagram for explaining the order of electrolysis in this embodiment. The operation point $B_1$ in Fig. 4 is an operation point corresponding to the operation point B in Fig. 1. In this embodiment, electrolysis is executed at first by setting the voltage of the WE to the RE to the set value $V_B$. As a result, the electrolysis mainly for generating CO is executed at the operation point $B_1$. As described in the above- described Embodiment 1, by setting the voltage of the WE to the RE higher, the CO generation amount can be made relatively large. That is, the electrolysis mainly for generating CO can be executed. Subsequently, in this embodiment, electrolysis is executed by setting the voltage of the WE to the RE to the set value $V_C$. As a result, the electrolysis mainly for generating $H_2$ is executed. The reason why $H_2$ is mainly generated is described in the above- described Embodiment 1.

By executing the electrolysis mainly for generating CO prior to the electrolysis mainly for generating $H_2$, CO can be generated more before the $CO_2$ concentration lowers by a rise of the temperature of the electrolytic solution. Therefore, the generation ratio between CO and $H_2$ can be prevented from becoming smaller than 1/2.

In addition to the above-described suppression effect, $H_2$ generation during electrolysis mainly for generating $H_2$ can be promoted according to this embodiment. If the temperature of the electrolytic solution rises by progress of the electrolysis, a moving speed of protons or the reaction speed of the above-described formula (2) increases. Thus, the characteristic line 10 in Fig. 4 changes to a characteristic line 30 with elapse of time. Therefore, as compared with the electrolysis at the operation point $C_1$ (corresponding to the operation point C in Fig. 1), $H_2$ can be generated in a shorter time. That is, the energy efficiency in the vicinity of the operation point $C_3$ can be obtained. Thus, the energy efficiency during the electrolysis can be further improved.

Embodiment 5

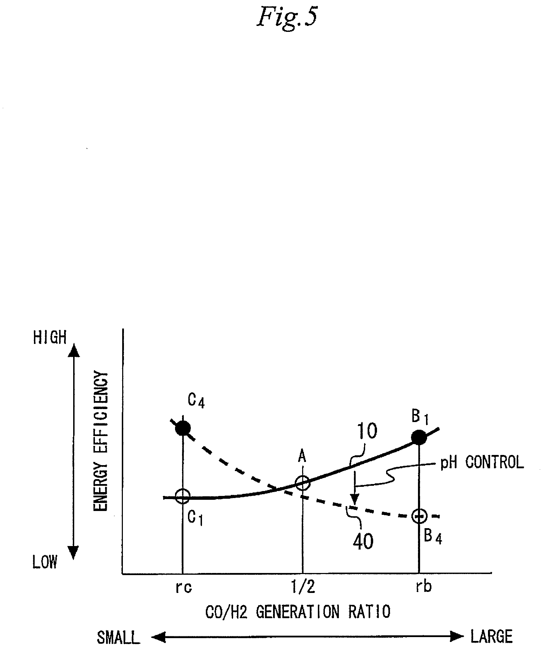

Subsequently, by referring to Fig. 5, Embodiment 5 of the present invention will be described. This embodiment is characterized in that an adding device for adding a pH adjusting agent into the electrolytic tank is added to the configuration of the above- described Embodiment 1, and this adding device is controlled during electrolysis. Since each constituent element is basically in common with those in the above- described Embodiment 1, the description will be omitted.

As described in the above-described Embodiment 4, since the temperature of the electrolytic solution rises by progress of the electrolysis, $CO_2$ dissolved in the electrolytic solution evaporates and $CO_2$ concentration lowers. Thus, in this Embodiment, the electrolysis is executed in the order similar to the above-described Embodiment 4, and moreover, the adding device is controlled so that pH of the electrolytic solution decreases in accordance with the progress of the electrolysis.

Fig. 5 is a diagram for explaining an outline of the control in this embodiment. In this embodiment, similarly to the above-described Embodiment 4, the electrolysis mainly for generating CO is executed prior to the electrolysis mainly for generating $H_2$. In addition, in this embodiment, the above-described adding device is controlled so that pH of the electrolytic solution becomes slightly higher at which $CO_2$ is difficult to evaporate during the electrolysis mainly for generating CO. Therefore, the generation ratio between CO and $H_2$ can be further prevented from becoming smaller than 1/2.

In this embodiment, the above-described adding device is controlled so that pH of the electrolytic solution becomes slightly lower at which $H_2$ can be generated easily during the electrolysis mainly for generating $H_2$. Thus, the characteristic line 10 in Fig. 5 changes to a characteristic line 40 with elapse of time. Therefore, as compared with the electrolysis at the operation point $C_1$ (corresponding to the operation point C in Fig. 1), $H_2$ can be generated in a shorter time. That is, the energy efficiency in the vicinity of an operation point $C_4$ can be obtained. Thus, the energy efficiency during the electrolysis can be further improved.

Embodiment 6

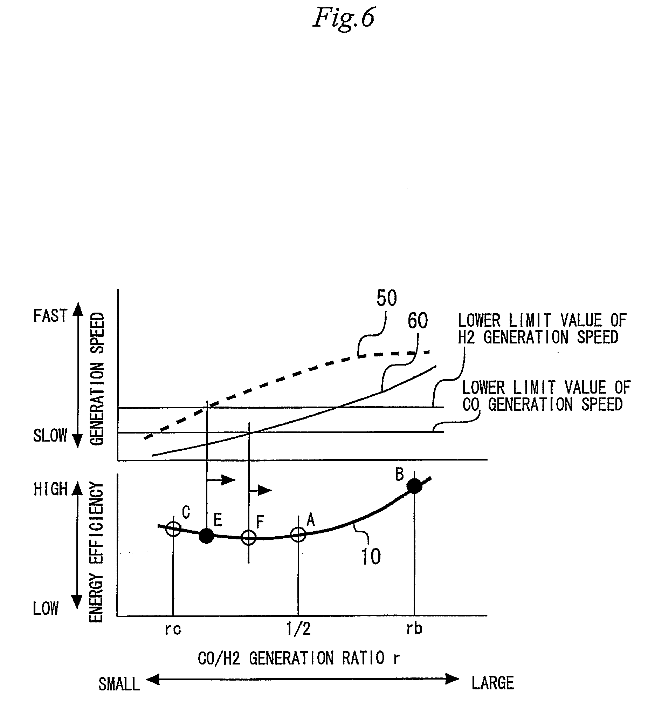

Subsequently, by referring to Fig. 6, Embodiment 6 of the present invention will be described. This embodiment uses the configuration of the above-described Embodiment 1 and is characterized in that the operation points B and C are determined by considering the generation speed of CO or $H_2$. Since each constituent element is basically in common with those in the above-described Embodiment 1, the description will be omitted.

As described in the above-described Embodiment 1, the operation points B and C can be determined as two points corresponding to the best among the total energy efficiency $\eta b + c$ calculated by using the above formula (11) and the like, and by executing electrolysis at the operation points B and C determined as above, the energy efficiency during the electrolysis can be improved. However, if the generation speed of CO or $H_2$ is too slow, electrolysis requires long time and deterioration of work efficiency of HC manufacture is concerned.

As described in the above-described Embodiment 4, on the side of the operation point smaller than 1/2, that is, on the operation point C side, the electrolysis mainly for generating $H_2$ can be executed. Thus, if the generation speed of $H_2$ on the operation point C side is too slow, an influence by deterioration of the work efficiency becomes large. Similarly, on the side of the operation point larger than 1/2, that is, on the operation point B side, the electrolysis mainly for generating CO can be executed. Thus, if the generation speed of CO on the operation point B side is too slow, the influence by deterioration of the work efficiency becomes large.

Thus, in this embodiment, lower limit values of the generation speeds of CO and $H_2$ are set, and the operation points B and C are determined in a range where the generation speeds are faster than the lower limit values. Fig. 6 is a diagram illustrating the generation speeds (mol/min) of CO and $H_2$ and the energy efficiency with respect to the generation ratio between CO and $H_2$.

A characteristic line 50 in Fig. 6 indicates the generation speed of $H_2$ and a characteristic line 60 indicates the generation speed of CO, respectively. As described in the above-described Embodiment 1, the generation ratio between CO and $H_2$ depends on the voltage of the WE to the RE. Moreover, if the voltage of the WE to the RE is set higher, the CO generation amount increases as well as the $H_2$ generation amount. Moreover, since the generation amounts of CO and $H_2$ increase if their generation speeds are fast, there is correlation between the generation speeds and the generation amounts of CO and $H_2$. Therefore, as illustrated in Fig. 6, the higher the generation ratio between CO and $H_2$ is set, the higher the generation speeds of CO and $H_2$ rise. Here, the lower limit values of the generation speeds of CO and $H_2$ are set as illustrated in Fig. 6. Then, an operation point corresponding to the lower limit value of the generation speed of $H_2$ is an operation point E in Fig. 6. Moreover, an operation point corresponding to the lower limit value of the generation speed of CO is an operation point F in Fig. 6.

As described above, on the operation point side smaller than 1/2, the electrolysis mainly for generating $H_2$ can be executed, while on the operation point side larger than 1/2, the electrolysis mainly for generating CO can be executed. Therefore, in this embodiment, the operation point C is determined within a range in which $CO/H_2$ is higher than the operation point E and the operation point B is determined within a range in which $CO/H_2$ is higher than the operation point F. Thus, the generation speeds of CO and $H_2$ can be ensured.

As described above, according to this embodiment, the lower limit values of the generation speeds of $H_2$ and CO are set in advance, and the operation points B and C can be determined within a range satisfying them, respectively. Therefore, the energy efficiency can be improved while deterioration of the work efficiency during electrolysis is reduced.

Description of Reference Numerals

10, 20, 30, 40, 50, 60 energy characteristic line

**Claims**

1. A mixed gas generating device for generating a mixed gas composed of hydrogen and carbon monoxide with a predetermined mixing ratio by electrolyzing water and carbon dioxide, comprising:

   at least one electrolytic tank provided with water and carbon dioxide therein;
   a pair of electrodes provided in said electrolytic tank; and
   potential control means for applying a plurality of potential differences including a potential difference larger than a predetermined potential difference which achieves said predetermined mixing ratio and a potential difference smaller than said predetermined potential difference between said electrodes.

2. The mixed gas generating device according to claim 1, wherein
   said plurality of potential differences are determined on the basis of a model which creates an association between energy efficiency specified by a calorific value of a generated product with respect to input energy and said plurality of potential differences.

3. The mixed gas generating device according to claim 2, wherein
   the order of applying said plurality of potential differences between said electrodes is determined in accordance with a degree of temporal change of said energy efficiency obtained in the case where each of said potential differences is applied between said electrodes.

4. The mixed gas generating device according to any one of claims 1 to 3, wherein
   said electrolytic tank is provided with an electrolytic solution having carbon dioxide absorbing characteristics therein; and
   the order of applying said plurality of potential differences between said electrodes is determined to be an order from the larger potential difference.

5. The mixed gas generating device according to claim 4, further comprising:

   pH changing means for changing pH of said electrolytic solution from the alkali side to the acid side, when said plurality of potential differences are to be applied between said electrodes.

6. The mixed gas generating device according to any one of claims 1 to 5, wherein
   each potential difference on the side smaller than said predetermined potential difference is set to a potential difference larger than a predetermined potential difference at which a generation speed of hydrogen to be generated becomes the lowest speed determined in advance.

*Fig.1*

*Fig.2*

*Fig.3*

*Fig.4*

*Fig.5*

*Fig.6*

## INTERNATIONAL SEARCH REPORT

| | International application No. |
|---|---|
| | PCT/JP2010/072033 |

A. CLASSIFICATION OF SUBJECT MATTER
*C25B9/00*(2006.01)i, *C01B3/02*(2006.01)i, *C25B1/04*(2006.01)i, *C25B3/04*(2006.01)i, *C25B15/02*(2006.01)i

According to International Patent Classification (IPC) or to both national classification and IPC

B. FIELDS SEARCHED

Minimum documentation searched (classification system followed by classification symbols)
C25B9/00, C01B3/02, C25B1/04, C25B3/04, C25B15/02

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)
WPI (C25B_3_04/IC)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-213472 A  (National Institute of Advanced Industrial Science and Technology), 30 July 2003 (30.07.2003), paragraphs [0007], [0008]; fig. 1 (Family: none) | 1,4,6<br><u>2,3,5</u> |
| X<br>Y | JP 7-118886 A  (The Kansai Electric Power Co., Inc.), 09 May 1995 (09.05.1995), paragraphs [0009], [0029], [0032]; fig. 3 to 5 (Family: none) | 1,4,6<br><u>2,3,5</u> |
| Y | JP 2006-176834 A  (Nissan Motor Co., Ltd.), 06 July 2006 (06.07.2006), paragraph [0023] (Family: none) | 2,3,5 |

☒  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 March, 2011 (08.03.11) | 15 March, 2011 (15.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/072033 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-218270 A  (Matsushita Electric Works, Ltd.), 08 August 2000 (08.08.2000), paragraph [0056] & JP 2001-70944 A | 5 |
| A | JP 2010-255018 A  (Toyota Central Research and Development Laboratories, Inc.), 11 November 2010 (11.11.2010), paragraphs [0014] to [0018], [0030]; fig. 1, 2 (Family: none) | 1-6 |

Form PCT/ISA/210 (continuation of second sheet) (July 2009)

**EP 2 650 402 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009506213 A
- JP 9085004 A
- JP 2008214563 A